# EUROPÄISCHE PATENTSCHRIFT

(11) **EP 3 360 409 B1**
(45) Veröffentlichungstag und Bekanntmachung des Hinweises auf die Patenterteilung: **10.06.2020**
(21) Anmeldenummer: 18156275.2
(22) Anmeldetag: 12.02.2018
(51) Int. Cl.: A01G 9/02

(54) **BEPFLANZBARE VORRICHTUNG SOWIE BAUSATZ ZUR HERSTELLUNG EINER BEPFLANZBAREN VORRICHTUNG**
PLANTABLE DEVICE AND A KIT FOR PRODUCING SAME
DISPOSITIF VÉGÉTALISABLE ET KIT POUR LA CONSTRUCTION D'UN DISPOSITIF VÉGÉTALISABLE

(30) Priorität: 13.02.2017 DE 102017102773
(43) Veröffentlichungstag der Anmeldung: 15.08.2018
(73) Patentinhaber: Lanvers, Jan, 48282 Emsdetten (DE)
(72) Erfinder: Lanvers, Jan, 48282 Emsdetten (DE)
(74) Vertreter: Patentanwälte Walther Hinz Bayer PartGmbB

(56) Entgegenhaltungen:
- EP-A2- 0 860 109
- FR-A1- 2 355 442
- GB-A- 2 212 375
- JP-A- 2012 075 438

## Beschreibung

Die Erfindung betrifft eine bepflanzbare Vorrichtung sowie einen Bausatz zur Herstellung der Vorrichtung mit einem Rahmenkörper, in dem mehrere in einer Höhenrichtung übereinander angeordnete Pflanzöffnungen ausgebildet sind, wobei der Rahmenkörper einen Aufnahmeraum aufweist, der mit einem Substrat befüllbar ist, das über die mehreren Pflanzöffnungen zugänglich ist.

### STAND DER TECHNIK

Für den vertikalen Anbau von Pflanzen sind beispielsweise zylindrische Konstruktionen mit mehreren umlaufenden und übereinander angeordneten Öffnungen zur jeweiligen Bepflanzung bekannt, wie beispielsweise mit der US 2013/0061521 A1 offenbart. Die unmittelbar senkrecht übereinander ausgebildeten Pflanzöffnungen sind nachteilhaft, da bei einem senkrechten Lichteinfall die oberen Pflanzen die unteren Pflanzen beschatten können. Ferner besteht der Rahmenkörper aus einem großen Einzelteil, sodass die Fertigung, jedoch auch der Transport und die Lagerung einer solchen bepflanzbaren Vorrichtung nachteilhaft sind. Darüber hinaus weist die bepflanzbare Vorrichtung innere Aufbauten auf, die die konstruktive Ausführung der Vorrichtung aufwändig erscheinen lässt.

Mit der DE 200 14 244 U1 ist ein Pflanzentopfsystem bekannt geworden, das aus mehreren diskreten Etagenteilen zusammensetzbar ist und bei dem die Einzelkomponenten aus Rohrelementen bestehen und aufeinandergesetzt werden können. Die Rohrelemente sind mit Erde befüllt und haben Ausschnitte, aus denen die Pflanzen ihre Blätter ins Sonnenlicht heraushängen können. Da auf die Erde kaum Licht fällt, ist diese Konstruktion für alle nicht rankenden und hängenden Pflanzen weniger geeignet. Ferner sind auch in dieser Konstruktion die Rohrelemente verhältnismäßig sperrig ausgebildet und bieten unverbaut keinen zusätzlichen Platzvorteil gegenüber einem zusammengesetzten Zustand, sodass die Lagerung der bepflanzbaren Vorrichtung beispielsweise in den Wintermonaten nachteilhaft ist.

Darüber hinaus sind Pflanzgefäße bekannt, die aus einer vertikalen Übereinanderreihung konischer oder sich nach unten zumindest verjüngender Einzelgefäße bestehen, siehe beispielsweise die DE 10 2009 051 728 A1, DE 25 03 758 A1 oder die US 5,438,797 A1.

Durch die Übereinanderreihung der Einzelgefäße entsteht zwar ein Zugewinn an bepflanzbarer Fläche der Pflanzöffnungen, welche sich bei senkrechtem Lichteinfall jedoch gegenseitig wiederum beschatten. Die komplexe Form der Einzelgefäße führt auch hier zu verhältnismäßig hohem Fertigungsaufwand, außerdem sind bei diesen Konstruktionen zusätzliche Trägerelemente erforderlich, um die Einzelgefäße übereinander anzuordnen.

Des Weiteren sind Pflanzgefäße für den vertikalen Anbau von Pflanzen bekannt, deren Durchmesser mit der Höhe abnimmt, um das Sonnenlicht besser nutzen zu können und die Beschattung zu verringern. Beispielsweise offenbart die EP 1 825 745 A2 eine nach oben schmaler werdende Trägerkonstruktion, auf die kegelstumpfförmige Schalungen aufgesetzt werden können, deren Durchmesser mit der Höhe abnimmt. Die von unten nach oben mit jeder weiteren Schalung entstehenden Hohlräume können sukzessive mit Erde befüllt und die entstehende Oberfläche schließlich bepflanzt werden. Die bessere Lichtausbeute dieser Konstruktion geht jedoch zu Lasten der bepflanzbaren Fläche einher, da diese nach oben hin immer kleiner wird. Ebenfalls ist eine Trägerkonstruktion notwendig, die hier im direkten Kontakt zum Substrat steht und daher von Biokorrosion bedroht ist.

Schließlich offenbart die FR 2 413 030 A1 ein Pflanzgefäß, bei dem sich ein durchgehendes Pflanzenbeet um eine rohrförmige Innenkonstruktion schraubenförmig in die Höhe windet. Da sich diese Konstruktion nach oben hin nicht verjüngt, besteht die Gefahr eines Lichtmangels bei den unteren Pflanzen. Außerdem ist die Herstellung der komplexen dreidimensionalen Form mit hohem Aufwand und hohen Kosten verbunden.

FR 2 355 442 A1, JP 2012 075438 A und GB 2 212 375 A veranschaulichen andere Beispiele für vertikale bepflanzbare Vorrichtungen.

### OFFENBARUNG DER ERFINDUNG

Aufgabe der Erfindung ist die Weiterbildung einer bepflanzbaren Vorrichtung, die vertikal ausgebildet ist und eine große bepflanzbare Fläche bietet, dessen Substrat, beispielsweise Erde, im Inneren nicht durch Zwischenwände getrennt ist, dessen Bepflanzung über der gesamten Höhe einen guten Lichteinfall erfährt und die einfach ausgebildet und herstellbar ist. Insbesondere soll die bepflanzbare Vorrichtung einen einfachen Aufbau aufweisen und im demontierten Zustand raumsparend verstaut werden können.

Diese Aufgabe wird ausgehend von einer bepflanzbaren Vorrichtung gemäß dem Oberbegriff des Anspruches 1 sowie ausgehend von einem Bausatz gemäß Anspruch 10 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass der Rahmenkörper aus einer Vielzahl von Flächenelementen gebildet ist, die über den Rändern der Flächenelemente eingebrachte Ausnehmungen lösbar ineinander gesteckt sind.

Kerngedanke der Erfindung ist die einfache Ausgestaltung eines Rahmenkörpers, der ausschließlich aus Flächenelementen aufbaubar ist, und die Flächenelemente sind erfindungsgemäß so ineinander steckbar, dass der Rahmenkörper ohne eine weitere Stützkonstruktion auskommt. Die ineinander gesteckten Flächenelemente stabilisieren sich dabei auf vorteilhafte Weise gegenseitig, sodass beispielsweise einwirkende Windkräfte vom Rahmenkörper gehalten werden können. Die Flächenelemente werden dabei so zueinander angeordnet und ineinander gesteckt, dass innenseitig der Flächenelemente der Aufnahmeraum entsteht, wobei der Aufnahmeraum zwischen den Flächenelementen in die Pflanzöffnungen übergeht. Wird der Aufnahmeraum von oben mit Substrat, beispielsweise Erde, einer Hydrokultur oder sonstigen bepflanzbaren Stoffen gefüllt, so gelangt das Substrat zwar bis in die Pflanzöffnung hinein, jedoch kann das Substrat aus der Pflanzöffnung nicht heraustreten, da die etagenweisen Pflanzöffnungen nach oben weisen, während das Substrat im Aufnahmeraum mit seiner Gewichtskraft nach unten wirkt.

Der wesentliche Vorteil des erfindungsgemäß ausgestalteten Rahmenkörpers ist die einfache Demontierbarkeit der Flächenelemente, die zur Lagerung raumsparend beispielsweise parallel zueinander im Paket angeordnet werden können. Darüber hinaus können die Flächenelemente im Wesentlichen gleich zueinander ausgebildet werden, sodass eine einfache Konstruktion mit niedrigen Herstellungskosten einhergeht.

Mit besonderem Vorteil sind die Flächenelemente länglich ausgebildet, wobei die Ränder die Längsseiten der Flächenelemente begrenzen. Mit anderen Worten sind die Ränder, die die Ausnehmungen aufweisen, den benachbarten Flächenelementen so zugewandt, dass eine Ausnehmung eines ersten Flächenelementes in die Ausnehmung eines weiteren Flächenelementes nach Art einer Nut - und Fugenverbindung eingesetzt werden kann. Dadurch erhält der Rahmenkörper eine hohe Stabilität.

Der Rahmenkörper ist mit besonderem Vorteil durch das Ineinanderstecken der Flächenelemente in einer Höhenrichtung variabel erweiterbar, nämlich indem weitere Flächenelemente in beliebiger Anzahl und Windung für Windung übereinander anordbar sind. So kann die bepflanzbare Vorrichtung in einer Höhe aufgebaut werden, wie diese aktuell gewünscht oder notwendig ist.

Ein wesentlicher Vorteil bei der Ausgestaltung des Rahmenkörpers wird erreicht, wenn die Flächenelemente bezogen auf eine Höhenrichtung unter einem Schrägungswinkel angeordnet sind. Durch die angeschrägte Anordnung der Flächenelemente zueinander entstehen größere Pflanzöffnungen zwischen den Flächenelementen, wobei der Schrägungswinkel beispielsweise 40° bis 60° und insbesondere 45° beträgt. Je größer der Schrägungswinkel, desto größer ist die Oberfläche der Pflanzöffnungen, und je kleiner der Schrägungswinkel gewählt wird, desto kleiner werden die Pflanzöffnungen, wobei aufgrund der Schraubenform auch ohne eine Schrägung bereits kleine Pflanzöffnungen gebildet werden.

Die Grundform der bepflanzbaren Vorrichtung kann beispielsweise dreieckig oder viereckig ausgeführt werden. Die Flächenelemente sind dafür so zusammengesteckt, dass der Rahmenkörper aus schraubenförmigen Windungen gebildet ist, wobei zur Bildung einer Windung des Rahmenkörpers aus Pflanzöffnungen die wenigstens drei Flächenelemente ineinander gesteckt werden. Eine Windung besteht damit aus drei bzw. aus vier ineinander gesteckten Flächenelementen. Bei einer Windung aus drei ineinander gesteckten Elementen schließen die Flächenelemente zueinander einen Winkel von beispielweise etwas kleiner und bevorzugt etwas größer als 60° ein.

Mit besonderem Vorteil werden die Flächenelemente derart ineinander gesteckt, dass diese bezogen auf ihre Längserstreckung wenigstens teilweise eine zu einer Aufstellebene geneigte Anordnung aufweisen. Die Neigung der aufeinander folgenden Flächenelemente kann dabei unterschiedlich sein, beispielsweise kann ein erstes Flächenelement eine Neigung von 0°, ein zweites Flächenelement kann eine Neigung von 4° und ein drittes Flächenelement kann eine Neigung von 6° aufweisen. Die geneigten Anordnungen der drei Flächenelemente wiederholt sich dabei von Windung zu Windung. Mit besonderem Vorteil ist die Neigung der Flächenelemente so beschaffen, dass das jeweils dritte Flächenelement mit dem unteren Rand auf dem oberen Rand des jeweils ersten Flächenelementes aufliegt, wodurch in Verbindung mit der Winkelung der Flächenelemente zueinander eine Schraubenform oder Spiralform der Vorrichtung in Höhenrichtung entsteht. Wenn der Winkel der Flächenelemente zueinander genau mit 60° bestimmt wird, dann entsteht keine Schraubenform und die Flächenelemente befinden sich in sich wiederholender Weise gerade übereinander.

Ein weiterer Vorteil wird erreicht, wenn die Flächenelemente derart ineinander gesteckt werden, dass der Rahmenkörper um eine Achse in Höhenrichtung die bevorzugte Schraubenform aufweist. Durch die Anordnung der Flächenelemente unter einem Schrägungswinkel zur Höhenrichtung ergibt sich für jede Windung der Flächenelemente ein Versatz um die Höhenrichtung, sodass folgerichtig auch die Pflanzöffnungen übereinander versetzt angeordnet sind. Somit überdecken die Blätter einer Bepflanzung nicht in dem Maße die darunter angeordnete Pflanzöffnung, und Pflanzen haben mehr Raum zur Verfügung, da sich durch die Schraubenform für jede Pflanzöffnung ein teilweiser Überhang ergibt.

Weiterhin ist vorgesehen, dass die Flächenelemente wenigstens überwiegend zueinander gleich ausgebildet sind, wobei insbesondere die zueinander gleich ausgebildeten Flächenelemente an sich gegenüberliegenden Rändern jeweils genau eine Ausnehmung aufweisen. Werden die Flächenelemente schraubenförmig angeordnet, so wird in eine Ausnehmung eines Flächenelementes eine Ausnehmung eines weiteren Flächenelementes eingesetzt. Durch die zueinander gleiche Ausgestaltung der in beliebiger Anzahl zueinander gleich herstellbaren Flächenelemente ergibt sich eine preiswerte Bereitstellung der bepflanzbaren Vorrichtung, und die Flächenelemente können beliebig miteinander verbunden werden, ohne dass diese markiert oder nummeriert sein müssen.

Ein besonderer Vorteil wird erreicht, wenn ein erstes Bodenflächenelement und ein zweites Bodenflächenelement als Teil des Rahmenkörpers zur bodenseitigen Anordnung vorgesehen sind, wobei das erste Bodenflächenelement an einem ersten Rand keine Ausnehmung und an einem zweiten Rand zwei Ausnehmungen aufweist, und wobei das zweite Bodenflächenelement an einem ersten Rand zwei Ausnehmungen und an einem zweiten Rand eine Ausnehmung aufweist. Die Bodenflächenelemente sind damit so ausgestaltet, dass die bepflanzbare Vorrichtung ohne eine bodenseitige Öffnung im Rahmenkörper auf einer Aufstandsfläche aufgestellt werden kann, sodass auch Teile des Substrats nicht herausrieseln können. Darüber hinaus ergibt sich eine verbesserte Standfestigkeit der bepflanzbaren Vorrichtung.

Die Flächenelemente können eine brettartige Gestalt aufweisen und aus Holz, aus Metall oder aus Kunststoff ausgebildet sein. Beispielsweise weisen die Flächenelemente eine Dicke von 5mm bis 20mm und bevorzugt von 10mm bis 15mm auf, wobei die Flächenelemente beispielsweise eine Breite von etwa 50mm bis 200mm und bevorzugt von 170mm aufweisen, und die Flächenelemente weisen eine Länge von beispielsweise etwa 300mm bis 1500mm und bevorzugt von 1000mm auf. Insbesondere ist es von Vorteil, die Flächenelemente aus Holz, aus Metall oder aus Kunststoff herzustellen, wobei Flächenelemente aus einem metallischen Werkstoff auch deutlich dünner ausgebildet werden können. Insbesondere können die Flächenelemente ausgesägt oder ausgestanzt werden, vorzugsweise dann, wenn die Flächenelemente aus einem Bandmaterial hergestellt werden und zueinander identisch sind.

Die Erfindung richtet sich weiterhin auf einen Bausatz zur Herstellung einer bepflanzbaren Vorrichtung, aufweisend eine Vielzahl von ineinander steckbaren Flächenelementen. Aus dem Bausatz umfassend eine Anzahl von Flächenelementen kann damit eine Vorrichtung mit einem Rahmenkörper ausgebildet werden, in dem mehrere in einer Höhenrichtung übereinander angeordnete Pflanzöffnungen ausgebildet sind, wobei der Rahmenkörper einen Aufnahmerahmen aufweist, der mit einem Substrat befüllbar ist, das über die mehreren Pflanzöffnungen zugänglich ist. Der Rahmenkörper weist dabei die Vielzahl der Flächenelemente auf und ist insbesondere ausschließlich aus der Vielzahl der Flächenelemente gebildet. Die Flächenelemente sind dabei über in den Rändern eingebrachte Ausnehmungen lösbar ineinander gesteckt. Durch die lösbare Verbindung der Flächenelemente können diese beliebig miteinander gefügt und auch wieder voneinander getrennt werden, beispielsweise um aus dem Bausatz die bepflanzbare Vorrichtung zu bilden und um die bepflanzbare Vorrichtung auch wieder zu einem Bausatz zurückzubilden, beispielsweise um diese vorübergehend einzulagern.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht einer bepflanzbaren Vorrichtung mit einem Rahmenkörper aus einer Vielzahl von Flächenelementen,
- Fig. 2: eine Detailansicht eines Flächenelementes sowie zweier Bodenflächenelemente und
- Fig. 3: die bepflanzbare Vorrichtung, bei der der innenseitige Aufnahmeraum im Rahmenkörper mit einem Substrat gefüllt ist.

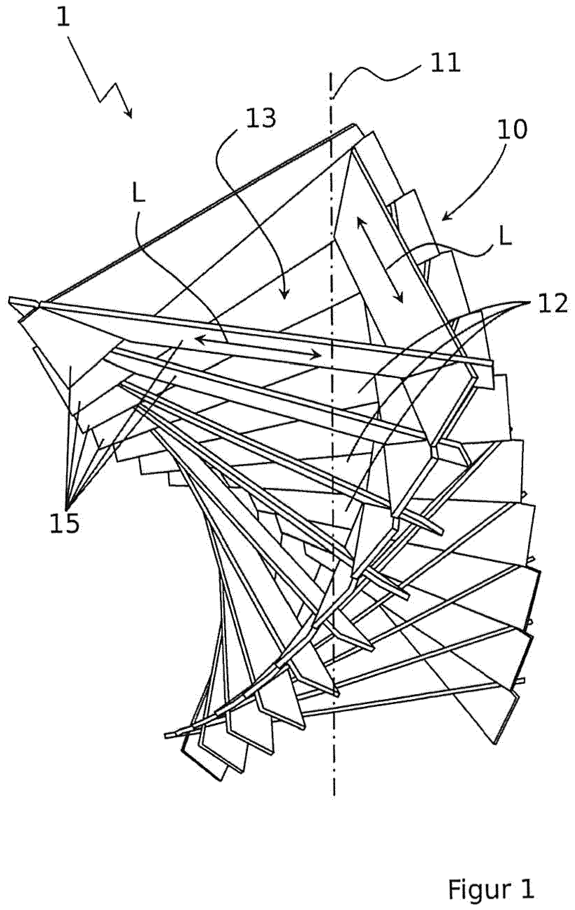

Figur 1 zeigt eine bepflanzbare Vorrichtung 1 mit einem Rahmenkörper 10, der gebildet ist ausschließlich durch eine Vielzahl von Flächenelementen 15, die ineinander gesteckt sind und sich in einer Höhenrichtung 11 turmartig erstrecken. Die Flächenelemente 15 weisen dabei eine Längserstreckung L auf, in die sich diese länglich erstrecken, wobei die Flächenelemente 15 etwa brettartig ausgebildet sind und beispielsweise aus Holz bestehen. Die Grund-Querschnittsform des Rahmenkörpers 10 weist drei Flächenelemente 15 auf, die jeweils eine Windung des Rahmenkörpers 10 in Höhenrichtung 11 bilden. Folgerichtig sind mehrere Windungen aus jeweils drei Flächenelementen 15 zusammengesteckt, um den Rahmenkörper 10 zu bilden.

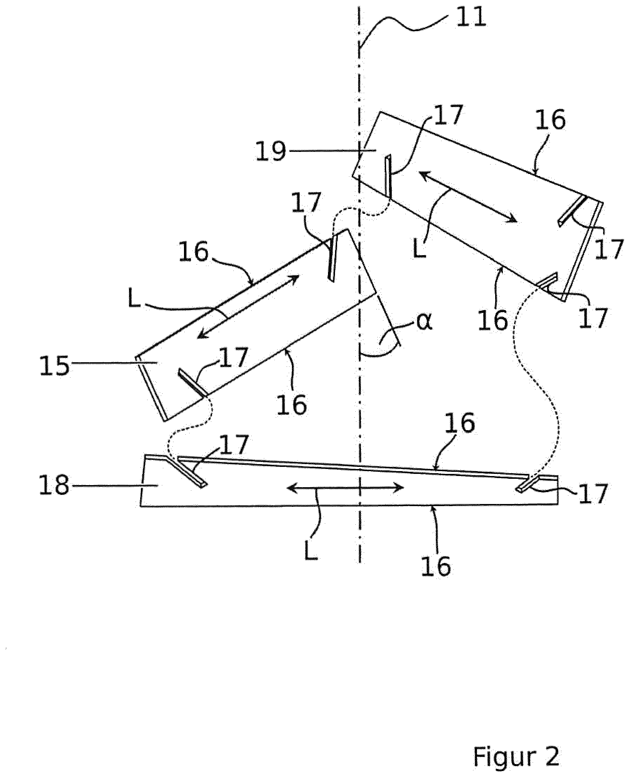

Die Flächenelemente 15 sind zur Höhenrichtung 11 gekippt angeordnet, sodass zwischen den Flächenelementen 15 Pflanzöffnungen 12 ausgebildet sind, und wird der Aufnahmeraum 13 des Rahmenkörpers 10 mit einem Substrat gefüllt, so ist das Substrat durch die Pflanzöffnungen 12 erreichbar, und dieses kann mit Pflanzen bepflanzt werden. Die Flächenelemente 15 werden derart ineinander gesteckt, dass der Rahmenkörper 10 um die Höhenrichtung 11 eine Schraubenform bildet. Folglich sind auch die übereinander angeordneten Pflanzöffnungen 12 seitlich zueinander versetzt, sodass über der jeweiligen Windung hängende Pflanzen die darunterliegenden Pflanzöffnungen nicht grundsätzlich beschatten. Um die Flächenelemente 15 entsprechend miteinander zu verbinden, weisen diese in den Rändern Ausnehmungen auf, wie in der folgenden Figur 2 näher dargestellt.

Figur 2 zeigt drei Flächenelemente 15, 18 und 19, wobei das Flächenelement 15 vielfach vorhanden ist, um den Rahmenkörper 10 in die Höhe zu bauen. Begonnen wird der Bau des Rahmenkörpers 10 dabei mit zwei Bodenflächenelementen 18 und 19, die gemeinsam mit dem ersten Flächenelement 15 in gezeigter Weise zusammengesteckt werden. Der Rahmenkörper 10 schließt dadurch bodenseitig ab, sodass Teile eines in den Aufnahmeraum eingefüllten Substrates nicht bodenseitig herausgelangen können.

Um die Flächenelemente 15, 18 und 19 miteinander zu verbinden, sind in den Rändern 16 auf gezeigte Weise Ausnehmungen 17 eingebracht. Die Ausnehmungen 17 bilden Nuten oder Kerben, die eine Breite aufweisen, die etwa der Dicke der Flächenelemente 15 entspricht. Die Ausnehmungen 17 sind dabei unter einem Winkel relativ zur Längserstreckung L ausgebildet, sodass sich bei einem Zusammenstecken der Flächenelemente 15, 18 und 19 ein Schrägungswinkel α der Flächenelemente 15 relativ zur Höhenrichtung 11 ergibt.

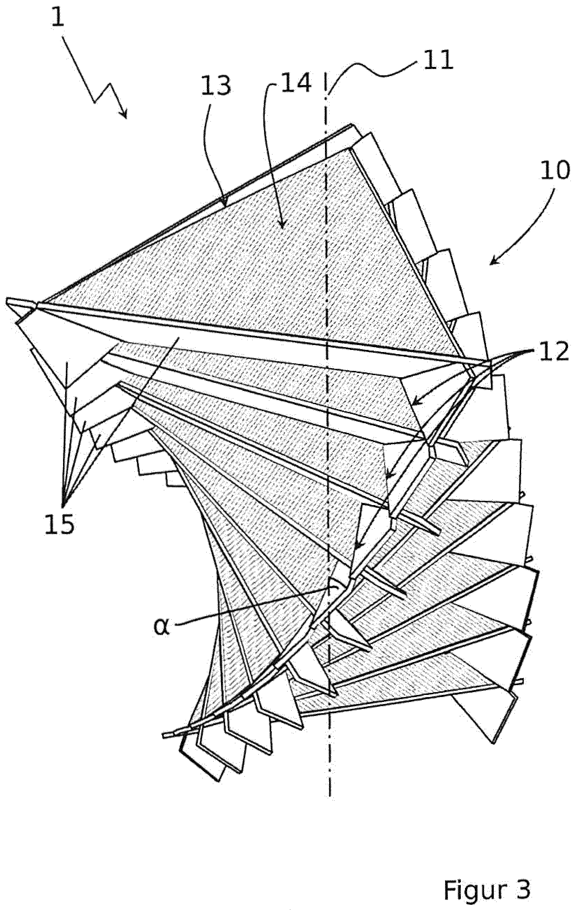

Schließlich zeigt Figur 3 die Ansicht der bepflanzbaren Vorrichtung 1 gemäß Figur 1 mit einer Auffüllung des Aufnahmeraums 13 mit einem Substrat 14. Der Aufnahmeraum 13 ist in der Höhenrichtung 11 durchgehend ausgebildet, sodass auch Pflanzen in die Pflanzöffnungen 12 zwischen den Flächenelementen 15 eingepflanzt werden können, die tiefwurzelnd wachsen. Durch die Schrägung der Flächenelemente 15, angedeutet mit dem Schrägungswinkel α relativ zur Höhenrichtung 11, ergeben sich die Pflanzöffnungen 12, und je größer der Schrägungswinkel α, desto tiefer ergeben sich die Pflanzöffnungen 12.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: bepflanzbare Vorrichtung

- 10: Rahmenkörper
- 11: Höhenrichtung
- 12: Pflanzöffnung
- 13: Aufnahmeraum
- 14: Substrat
- 15: Flächenelement
- 16: Rand
- 17: Ausnehmung
- 18: Bodenflächenelement
- 19: Bodenflächenelement

- α: Schrägungswinkel
- L: Längserstreckung

## Patentansprüche

1. Bepflanzbare Vorrichtung (1) mit einem Rahmenkörper (10), in dem mehrere in einer Höhenrichtung (11) übereinander angeordnete Pflanzöffnungen (12) ausgebildet sind, wobei der Rahmenkörper (10) einen Aufnahmeraum (13) aufweist, der mit einem Substrat (14) befüllbar ist, das über die mehreren Pflanzöffnungen (12) zugänglich ist,
**dadurch gekennzeichnet,**
**dass** der Rahmenkörper (10) aus einer Vielzahl von Flächenelementen (15, 18, 19) gebildet ist, die über in den Rändern (16) der Flächenelemente (15, 18, 19) eingebrachte Ausnehmungen (17) lösbar ineinander gesteckt sindund wobei die Flächenelemente (15, 18, 19) so zusammengesteckt sind, dass der Rahmenkörper (10) aus schraubenförmigen Windungen gebildet ist.

2. Bepflanzbare Vorrichtung (1) nach Anspruch 1,
**dadurch gekennzeichnet,**
**dass** die Flächenelemente (15, 18, 19) länglich ausgebildet sind, wobei die Ränder (16) die Längsseiten der Flächenelemente (15, 18, 19) begrenzen.

3. Bepflanzbare Vorrichtung (1) nach Anspruch 1 oder 2,
**dadurch gekennzeichnet,**
**dass** der Rahmenkörper (10) durch das Ineinanderstecken der Flächenelemente (15) in einer Höhenrichtung (11) variabel erweiterbar ist, indem weitere Flächenelemente (15) windungsartig übereinander anordbar sind.

4. Bepflanzbare Vorrichtung (1) nach einem der Ansprüche 1 bis 3,
**dadurch gekennzeichnet,**
**dass** die Flächenelemente (15, 18, 19) bezogen auf eine Höhenrichtung (11) unter einem Schrägungswinkel (α) angeordnet sind.

5. Bepflanzbare Vorrichtung (1) nach einem der vorgenannten Ansprüche,
**dadurch gekennzeichnet,**
**dass** zur Bildung einer Windung des Rahmenkörpers (10) aus Pflanzöffnungen (12) wenigstens drei Flächenelemente (15) ineinander gesteckt werden.

6. Bepflanzbare Vorrichtung (1) nach einem der vorgenannten Ansprüche,
**dadurch gekennzeichnet,**
**dass** die Flächenelemente (15) derart ineinander gesteckt sind, dass diese bezogen auf ihre Längserstreckung (L) wenigstens teilweise eine zu einer Aufstellebene geneigte Anordnung aufweisen.

7. Bepflanzbare Vorrichtung (1) nach einem der vorgenannten Ansprüche,
**dadurch gekennzeichnet,**
**dass** die Flächenelemente (15) wenigstens überwiegend zueinander gleich ausgebildet sind und/oder dass die zueinander gleich ausgebildeten Flächenelemente (15) an sich gegenüberliegenden Rändern (16) jeweils genau eine Ausnehmung (17) aufweisen.

8. Bepflanzbare Vorrichtung (1) nach einem der vorgenannten Ansprüche,
**dadurch gekennzeichnet,**
**dass** ein erstes Bodenflächenelement (18) und ein zweites Bodenflächenelement (19) als Teil des Rahmenkörpers (10) zur bodenseitigen Anordnung vorgesehen sind, wobei das erste Bodenflächenelement (18) an einem ersten Rand (16) keine Ausnehmung (17) und an einem zweiten Rand (16) zwei Ausnehmungen (17) aufweist und/oder wobei das zweite Bodenflächenelement (19) an einem ersten Rand (16) zwei Ausnehmungen (17) und an einem zweiten Rand (16) eine Ausnehmung (17) aufweist.

9. Bepflanzbare Vorrichtung (1) nach einem der vorgenannten Ansprüche,
**dadurch gekennzeichnet,**
**dass** die Flächenelemente (15, 18, 19) eine brettartige Gestalt aufweisen und aus Holz, aus Metall oder aus Kunststoff ausgebildet sind.

10. Bausatz zur Herstellung einer bepflanzbaren Vorrichtung (1) nach einem der vorgenannten Ansprüche, **dadurch gekennzeichnet, dass** es eine bepflanzbare Vorrichtung (1) nach einem der vorgenannten Ansprüche umfasst, aufweisend eine Vielzahl von ineinander steckbaren Flächenelementen (15, 18, 19).

## Claims

1. A plantable device (1) with a frame body (10) in which a plurality of planting openings (12) are formed, arranged one above the other in a vertical direction (11), the frame body (10) having a receiving space (13) which can be filled with a substrate (14) which is accessible via the plurality of planting openings (12),
**characterized in that**
the frame body (10) is formed from a plurality of surface elements (15, 18, 19) which are detachably fitted into one another via recesses (17) introduced into the edges (16) of the surface elements (15, 18, 19), and wherein the surface elements (15, 18, 19) are fitted together in such a way that the frame body (10) is formed by helical windings.

2. The plantable device (1) according to claim 1,
**characterized in that**
the surface elements (15, 18, 19) are elongated, wherein the edges (16) delimit the longitudinal sides of the surface elements (15, 18, 19).

3. The plantable device (1) according to claim 1 or 2,
**characterized in that**
the frame body (10) is variably expandable in a vertical direction (11) by fitting the surface elements (15) into one another and arranging additional surface elements (15) on top of one another in a winding manner.

4. The plantable device (1) according to one of the claims 1 to 3,
**characterized in that**
the surface elements (15, 18, 19) are arranged at a helix angle (α) with respect to a vertical direction (11).

5. The plantable device (1) according to one of the afore-mentioned claims,
**characterized in that**
at least three surface elements (15) are fitted into one another to form a winding of the frame body (10) of plant openings (12).

6. The plantable device (1) according to one of the afore-mentioned claims,
**characterized in that**
the surface elements (15) are fitted into one another in such a way that, in relation to their longitudinal extension (L), they have an arrangement which is at least partially inclined with respect to an installation plane.

7. The plantable device (1) according to one of the afore-mentioned claims,
**characterized in that**
the surface elements (15) are at least predominantly of the same design and/or **in that** the surface elements (15) of the same design each have exactly one recess (17) on opposite edges (16).

8. The plantable device (1) according to one of the afore-mentioned claims,
**characterized in that**
a first ground surface element (18) and a second ground surface element (19) are provided as part of the frame body (10) for arrangement on the ground, wherein the first ground surface element (18) has no recess (17) on a first edge (16) and has two recesses (17) on a second edge (16) and/or the second ground surface element (19) has two recesses (17) on a first edge (16) and one recess (17) on a second edge (16).

9. The plantable device (1) according to one of the afore-mentioned claims,
**characterized in that**
the surface elements (15, 18, 19) have a board-like shape and are formed from wood, from metal or from a synthetic material.

10. A kit for manufacturing a plantable device (1) according to one of the afore-mentioned claims,
**characterized in that**
it comprises a plantable device (1) according to one of the aforementioned claims, comprising a plurality of surface elements (15, 18, 19) that can be fitted into one another.

## Revendications

1. Dispositif plantable (1) avec un corps de cadre (10) dans lequel sont formées plusieurs ouvertures de plantation (12) disposées les unes au-dessus des autres dans la direction de la hauteur (11), où le corps de cadre (10) présente un espace de réception (13) qui peut être rempli d'un substrat (14) accessible par les plusieurs ouvertures de plantation (12),
**caractérisé en ce que**
le corps de cadre (10) est formé d'une pluralité d'éléments de surface (15, 18, 19) qui sont emboîtés les uns dans les autres de manière amovible par l'intermédiaire d'évidements (17) pratiqués dans les bords (16) des éléments de surface (15, 18, 19), et où les éléments de surface (15, 18, 19) sont assemblés de telle sorte que le corps de cadre (10) est formé de spires hélicoïdales.

2. Dispositif plantable (1) selon la revendication 1,
**caractérisé en ce que**
les éléments de surface (15, 18, 19) sont de forme oblongue, les bords (16) délimitant les côtés longitudinaux des éléments de surface (15, 18, 19).

3. Dispositif plantable (1) selon la revendication 1 ou 2,
**caractérisé en ce que**
le corps de cadre (10) peut être étendu de manière variable dans la direction de la hauteur (11) par emboîtement des éléments de surface (15) les uns dans les autres, d'autres éléments de surface (15) pouvant être disposés les uns sur les autres à la manière d'une spirale.

4. Dispositif plantable (1) selon l'une des revendications 1 à 3,
**caractérisé en ce que**
les éléments de surface (15, 18, 19) sont disposés selon un angle d'hélice (α) par rapport à la direction de la hauteur (11).

5. Dispositif plantable (1) selon l'une des revendications précédentes,
**caractérisé en ce qu'**
au moins trois éléments de surface (15) sont emboîtés les uns dans les autres pour former une spire du corps de cadre (10) d'ouvertures de plantation (12).

6. Dispositif plantable (1) selon l'une des revendications précédentes,
**caractérisé en ce que**
les éléments de surface (15) sont emboîtés les uns dans les autres de telle sorte que, par rapport à leur extension longitudinale (L), ils présentent un agencement au moins partiellement incliné par rapport à un plan d'installation.

7. Dispositif plantable (1) selon l'une des revendications précédentes,
**caractérisé en ce que**
les éléments de surface (15) ont au moins en grande partie la même forme et/ou **en ce que** les éléments de surface (15) de même forme présentent chacun exactement un évidement (17) sur des bords opposés (16).

8. Dispositif plantable (1) selon l'une des revendications précédentes,
**caractérisé en ce qu'**
un premier élément de surface au sol (18) et un deuxième élément de surface au sol (19) sont prévus en tant que partie du corps de cadre (10) pour être disposés du côté du sol, où le premier élément de surface au sol (18) ne présente pas d'évidement (17) sur un premier bord (16) et deux évidements (17) sur un second bord (16) et/ou où le second élément de surface au sol (19) présente deux évidements (17) sur un premier bord (16) et un évidement (17) sur un second bord (16).

9. Dispositif plantable (1) selon l'une des revendications précédentes,
**caractérisé en ce que**
les éléments de surface (15, 18, 19) ont une forme de planche et sont constitués de bois, de métal ou de plastique.

10. Kit pour la fabrication d'un dispositif plantable (1) selon l'une des revendications précédentes,
**caractérisé en ce qu'**il comprend un dispositif plantable (1) selon l'une des revendications précédentes, comprenant une pluralité d'éléments de surface (15, 18, 19) s'emboîtant les uns dans les autres.
